# EUROPEAN PATENT SPECIFICATION

(11) **EP 2 074 233 B1**
(45) Date of publication and mention of the grant of the patent: **23.03.2011**
(21) Application number: 07866148.5
(22) Date of filing: 05.10.2007
(51) Int. Cl.: C22B 3/18

(54) **ACCELERATED HEAT GENERATION IN HEAP BIOLEACHING BY CONTROLLED CARBON DIOXIDE ADDITION**
BESCHLEUNIGTE WÄRMEERZEUGUNG BEI DER HALDENBIOAUSLAUGUNG DURCH GESTEUERTEN KOHLENDIOXIDZUSATZ
GÉNÉRATION DE CHALEUR ACCÉLÉRÉE POUR LIXIVIATION BIOLOGIQUE EN TAS PAR ADDITION CONTRÔLÉE DE DIOXYDE DU CARBONE

(30) Priority: 13.10.2006 ZA 200607651
(43) Date of publication of application: 01.07.2009
(73) Proprietor: BHP Billiton SA Limited, 2194 Randburg (ZA)
(72) Inventor: DU PLESSIS, Chris, 2194 Randburg (ZA); MINNAAR, Sanet Helena, 2125 Randburg (ZA)
(74) Representative: Patentanwälte Ruff, Wilhelm, Beier, Dauster & Partner
(86) International application number: PCT/ZA2007/000067
(87) International publication number: WO 2008/046114

(56) References cited:
- WO-A-00/71763
- WO-A-2004/027099
- WO-A-2005/061741
- WO-A-2005/073414

## Description

### BACKGROUND OF THE INVENTION

This invention relates generally to dump and heap leaching processes, collectively referred to herein as heap leaching, and is particularly concerned with the generation of heat within a heap in order to achieve metal recovery at elevated temperatures.

It particularly applies to heat generation beyond 60 °C for heaps containing relatively low concentration of total sulphides in the ore, i.e. 1 - 5 % sulphide.

International patent application WO 2005/073414 describes a process of adding a carbon source, such as carbon dioxide, to a heap when the temperature in the heap is in the range 45 °C to 60 °C, to increase microbial activity and thereby raising the heap temperature.

International patent application WO 2000/071763 describes a heap leaching process during which an oxygen containing gas is introduced to the heap as a source of oxygen for bioleaching microbes.

The invention is described with particular reference to the leaching of chalcopyrite-containing marginal copper sulphide ores but it is to be understood that this is only by way of a non-limiting example. The principles of the invention can be applied with equal effect to the recovery of other metals such as nickel, gold, cobalt and zinc.

Unlike secondary copper sulphide minerals chalcopyrite is not readily leached under mesophilic bacterial bioleaching conditions although chalcopyrite heap-leaching can be carried out successfully at elevated temperatures, preferably in excess of 55 °C.

The temperature prevailing in a heap is the net result of heat generation and heat loss/retention factors. Heat generation is primarily the result of direct or indirect microbial oxidation of sulphur to sulphate. The microbes are also required to convert ferrous iron to ferric iron and hence to control the solution redox potential. Most of the sulphur and thus the heat generation capability are typically associated with pyrite contained in the ore.

International patent application WO 2004/027099 discloses a method of controlling the temperature in a heap leach process by controlling factors that have an effect on the heat generating capacity of the heap and heat loss from the heap.

As the temperature in a heap is increased populations of bioleaching microorganisms which are sequentially viable in successive temperature ranges, are required This is necessary because microorganisms that dominate the population at ambient temperature, at heap startup, are not able to grow and contribute to the bioleaching process at an elevated temperature Such sequential populations are known to exist and includes species from the following archaeal and bacterial genus groups for each temperature category:

Mesophilic
- Ambient - 45 °C:: *Acidithiobacillus, Leptospirillum, Thiobacillus, Acidimicrobium, Sulfobacillus, Ferroplasma (Femplasma), Femmicrobium, Acidiphilum, Alicyclobacillus.*

Moderate Thermophilic
- 45 °C - 60 °C:: *Acidithiobacillus, Thiobacillus, Acidimicrobium, Sulfobacillus, Ferroplasma (Ferrrplasma), Thermoplasma, Alicyclobacillus, Femmicrobium.*

Thermophilic
- > 60 °C:: *Sulfolobus, Acidianus, Metallosphaera, Ferroplasma (Femplasma), Thermoplasma.*

Microbial activity in a heap is dependent upon the availability of the energy sources of reduced sulphur and iron, upon the presence of oxygen as an electron acceptor and of carbon dioxide as a carbon source to autotrophic bioleaching microbes, and upon the availability of micronutirents and macronutirents such as potassium, ammonium and phosphate.

In a heap bioleaching process air is supplied to a base of the heap and oxygen and carbon dioxide are consumed by the bioleaching microbes as the air stream migrates upwards through the heap. The concentrations of these gaseous constituents (O₂ and CO₂) within the heap are thus a function of height within the heap whereas the energy source for the microbes (the reduced sulphur and iron, also referred to as oxidizable equivalents in the ore) is obtained from the ore material and is not primarily dependent on a position inside the heap but rather is a function of time, due to consumption. Oxidizable equivalents are used to refer to any mineral oxidation reaction utilizing oxygen. The heat generation from mineral oxidation reactions in a typical heap leaching application has been found to correspond to a value of approximately 400 kJ of energy per mole of oxygen consumed, a value which is relatively independent of the mineral type being oxidized.

From the aforegoing it is clear that primary factors governing microbial growth are:
1. the presence of oxidizable compounds (reduced iron and sulphur) in the ore. These compounds are also referred to as oxidisable equivalents;
2. the prevailing concentration of carbon dioxide in the heap; and
3. the prevailing concentration of oxygen in the heap.

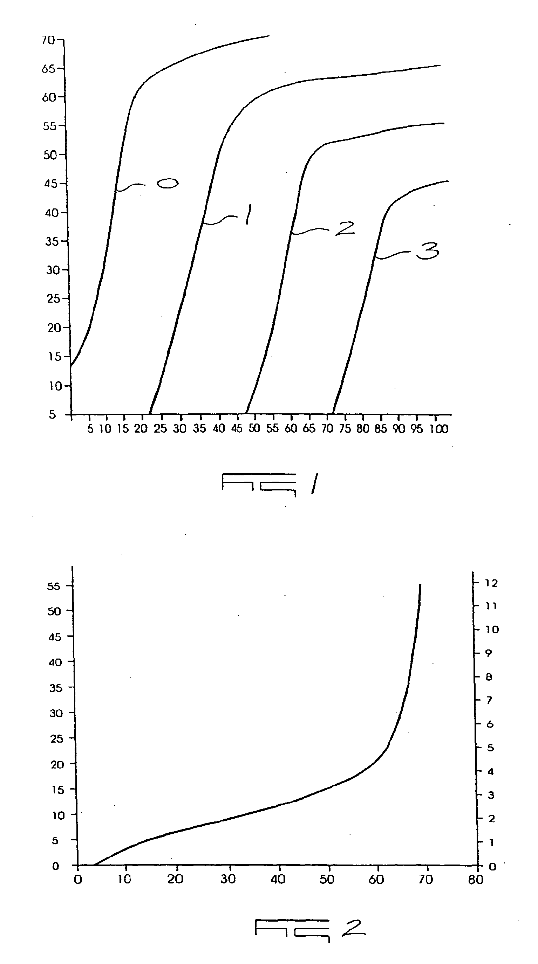

The temperature in a heap is dependent on the heat generation rate due to microbial activity and on the rate of heat loss. The latter factor is governed by atmospheric conditions, air flow rate through the heap, irrigation rate and the prevailing heap temperature. Figure 1 graphically depicts daily increases or decreases in average heap temperature as a function of prevailing heap temperature and heat generation rate. At any given prevailing heap temperature there is a threshold generation rate required to maintain the average heap temperature and ensure that the heap does not cool. A typical threshold curve is shown in Figure 2. If the heat generation rate is higher than this threshold the average temperature in the heap increases while a lower heat generation rate results in a decrease in the average temperature in the heap.

If the air flow rate is sufficient, the concentration of oxygen in a heap does not usually drop to a value which is sufficiently low to inhibit microbial growth or activity. Consequently the main controlling factors for microbial growth and hence for heat generation, are the carbon dioxide concentration as well as the presence and concentration of remaining and accessible oxidizable equivalents in the ore.

Despite the general importance of the presence of carbon dioxide to microbial activity, in the case of chalcopyrite leaching, a problem exists in overcoming a temperature, in the moderate thermophile growth region, of about 55°C (this value is used as illustrative of the decline in growth rate activity which occurs most significantly from 52°C to 58°C). At this temperature carbon dioxide consumption is very low, due to poor microbial growth, and carbon dioxide is, therefore, readily available throughout the heap even if unsupplemented air is used. It is of little avail therefore to attempt to overcome the 55°C threshold by resorting to carbon dioxide supplementation. At this temperature carbon dioxide limitation is not a problem.

An object of the invention is to address, at least partly, this temperature threshold problem.

### SUMMARY OF INVENTION

The invention provides, in a microbial heap leaching operation, a method of increasing the level of heat generated in the heap at moderate thermophilic temperatures, which includes the step of stimulating microbial growth, in the heap, at mesophilic temperatures.

A flow of air may be directed into the heap, preferably at a base thereof, and the step of stimulating microbial growth may be achieved by adding carbon dioxide to the air flow. Preferably the stimulation of microbial growth by the addition of carbon dioxide to the air flow or otherwise, is commenced when the temperature in the heap is at or close to ambient temperature.

The method may include the steps of monitoring the concentration of carbon dioxide in an air flow exiting the heap wand, in response thereto, of controlling the addition of carbon dioxide to the air flow which is directed into the heap.

It is known from the literature that the half-saturation constant for a general mesophilic microbial population prevailing in a heap is in the range 0,02 to 0,05% v/v CO₂ (Huloigue et al.: CO2 fixation by mineral-leaching bacteria - characteristics of ribulose bisphosphate carboxylase-oxygenase of Thiobacillus ferrooxidans, Biotechnology and Applied Biochemistry 1987, 9, 497-505). With this as a guideline it is desirable that, in the method of invention, the exit concentration of the carbon dioxide should be maintained above the half-saturation point i.e. in the range 0,02 to 0,05% v/v CO₂. This value and the kinetic response in microbial growth should ideally be determined experimentally in each case as these factors depend upon the specific microbial inoculation composition and the amount of carbon dioxide which is liberated from the interaction of gangue minerals with an acidic raffinate solution, returned to the heap, which is produced by stripping the metal content from pregnant liquid solution draining from the heap. Some carbon dioxide is also released due to the decomposition and decay of microbial biomass in the heap.

While the emphasis is on CO₂ supplementation, as the likelihood of CO₂-inhibited growth kinetics in a heap is likely to occur before O₂-limiting occurs, oxygen monitoring and control is also contemplated in a similar manner in order to maintain the O₂ concentration in the heap above 5% (v/v).

According to a different aspect of the invention there is provided a method of operating a heap-bioleaching process which includes the step of stimulating microbial growth at mesophilic temperatures in the heap, to achieve a high concentration of mesophilic microbial strains, in the heap, that exhibit sufficient metabolic activity at moderate thermophilic temperatures to generate heat within the heap at a rate which exceeds the rate of heat loss from the heap. This permits the heap temperature to rise above the 55 °C threshold whereafter the heat generated by moderate thermophilic and by thermophilic microorganisms becomes dominant.

### BRIEF DESCRIPTION OF THE DRAWINGS

The invention is further described by way of example with reference to the accompanying drawings in which: ,
Figures 1 and 2 are graphical depictions of various parameters in a heap, during a bioleaching process and have been referred to in the preamble hereof;
Figure 3 depicts a heap in which the method of the invention is implemented; and
Figures 4 and 5 are curves of CO₂ and O₂ consumption versus temperature in a conventional heap and in a heap in which the principles of the invention are used, respectively.

### DESCRIPTION OF PREFERRED EMBODIMENT

The invention is based on surprising effects observed in laboratory experiments which simulate heap leaching processes. Respirometry measurements of carbon dioxide and oxygen levels at vertically spaced intervals in a heap have established that within weeks of the commencement of a bioleaching operation in the heap the carbon dioxide in an airflow directed into a base of the heap, is fully consumed within lower sections of the heap, and that upper sections of the heap are then deprived of carbon dioxide. As noted the half-saturation constant for a mesophilic microbial population in a heap lies in the range of 0,02 to 0,05% v/v CO₂., although this is known to be dependent upon the specific microbial strains used. This means that, in general, growth of bioleaching microbes in the mesophilic range is most likely to be limited by the CO₂ concentration in air and is particularly constrained if the CO₂ concentration is less than 0.02%.

Carbon dioxide is fully consumed, to virtually zero concentration, in the lower region of a heap at a typical air flow rate of 0,02 to 0,09 Nm³ t⁻¹h⁻¹. This results in a maldistribution of microbial growth in the heap with most of the microbial growth occurring at the bottom. To the applicant's knowledge this finding has not been reported before in the literature. This occurs due to the fact that CO₂/O₂ is consumed, during the heap bioleaching process, at a ratio that is higher than the ratio in which these two gasses occur in air. This phenomenon is detectable and has significant effect only in ores that do not contain significant concentrations of carbonate type material and hence only applies to ores that do not yield a sustained release of carbon dioxide upon reaction with acid.

It has been established that the non-uniform distribution of microbial growth translates into a maldistribution of heat generation. To the applicant's knowledge this finding has also not been reported before in the literature. Most heat is generated initially at the bottom of the heap.

With the passage of time the carbon, dioxide consumption in the bottom section of the heap declines and the carbon dioxide concentration increases at higher levels, in the heap. The phenomenon progresses upwardly through the heap.

The decline in carbon dioxide consumption in the bottom region of the heap is due to one or more of the following
a) microbial growth limitation due to available sulphur and other oxidisable equivalents;
b) microbial saturation and maintenance effects; and
c) a shift in microbial population type from a mesophilic to a moderate thermophilic population where different carbon assimilation mechanisms, consumption rates and kinetic effects apply.

The combination of carbon dioxide consumption and the microbial kinetic response to the resulting carbon dioxide profile causes a wavefront type of microbial growth effect which gradually migrates from the bottom of the heap upwardly through the entire heap. The growth wavefront induces a similar heat generation wavefront. The fact that heat generation occurs in a wavefront fashion is not ideal and presents a significant problem in attaining elevated and uniform heap temperatures. Under this condition only a portion of the heap is heat-generating while heat losses take place from the entire heap. This increases the probability that the average heat generation rate will fall below the curve illustrated in Figure 2. To address this adverse factor the invention aims to establish a regime whereby heat generation takes place on a more widespread basis throughout the heap.

For successful attainment of elevated average heap temperatures approaching 70°C it is important to have temperature sequential populations that can facilitate heat generation sufficiently to exceed heat losses throughout the full temperature range. Microbial strains have been listed which are active in each of the temperature categories i.e. mesophilic, moderate thermophilic and thermophilic. However the microbial activity and heat generation activity of currently known microbial populations at approximately 55°C (or more generally between 50 and 60°C) have been found to be relatively poor compared to what occurs in the higher and lower temperature regimes. The heap temperature is thus prone to being confined to a lower value, and is prevented from increasing beyond 60°C. This phenomenon is exaggerated as a function of decreasing total sulphur content and availability in the ore.

An increase in the air flow rate will only alleviate the problem of non-uniform microbial growth to a limited extent and can exacerbate the problem by increasing heat losses. An increased air flow rate can exhibit a significant cooling effect in that much of the generated heat is convectively carried from the heap by the air flow.

It has been found, surprisingly, that the reduced microbial growth rate and heat generation effects encountered at 55°C (or more generically between 50 and 60°C), i.e. in the moderate thermophilic region, can be meaningfully overcome by stimulating microbial growth in the mesophilic range. This is done by adding carbon dioxide to the air flow supply to the heap during the early stages of heap operation, prior to encountering the 50 - 60°C temperature range. A further benefit which flows from the addition of carbon dioxide is that rapid and widespread, more uniform, microbial growth is induced throughout the heap.

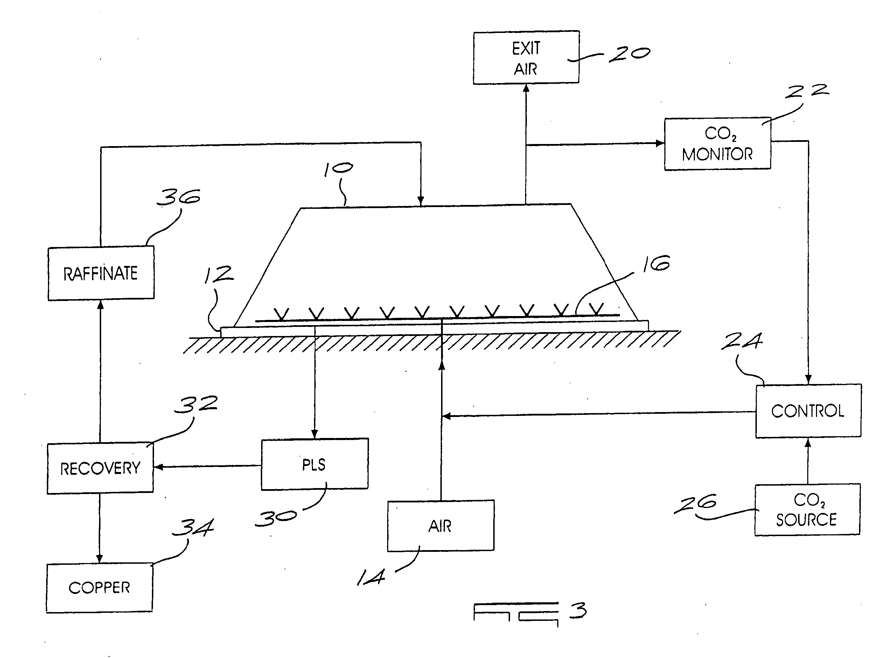

Figure 3 illustrates a heap 10 of chalcopyrite-containing ore, with approximately 3% total sulphide, on a pad 12. Air from a source 14 is directed into a lower region of the heap via a manifold 16. The carbon dioxide content of air 20 exiting from an upper side of the heap is monitored by a carbon dioxide monitor 22. The monitored reading is used to regulate the operation of a control unit 24 which is used for controlling the supply of carbon dioxide from a source 26 to the air from the source 14. More detailed gas concentration profiles in the heap can also be obtained by making use of gas monitors installed at various depths in a heap.

Pregnant liquor solution 30 draining from the pad is directed to a recovery process 32 which produces copper 34. Raffinate 36 from the process is used to irrigate the heap from above. The heap can additionally be irrigated to introduce acid, microbial inoculum, nutrients or other constituents into the heap. These aspects are known and therefore are not further described herein.

The carbon dioxide is added to the air distribution manifold when the bioleach process is initiated or when the monitored exit concentration of CO₂ is below the half-saturation concentration. The amount of carbon dioxide added should be such that the carbon dioxide concentration in the exit air stream 20 is above the half-saturation point for carbon dioxide i.e. from 0,02 to 0,05% v/v CO₂ The exact value of the carbon dioxide concentration is determined experimentally in each case as it also depends upon the specific inoculation composition and the amount of carbon dioxide which is liberated from an interaction of the gangue minerals in the heap with the acidic raffinate solution 36, and the decay of microbial cells in the heap.

The positive impact on heat generation at moderate thermophilic temperatures which results from the stimulation of microbial growth at mesophilic growth conditions is unexpected and has not previously been reported. Without being bound thereby it is believed that the carbon dioxide supplementation during the mesophilic stage produces a high concentration of mesophilic microbial strains, for example *Acidithiobacillus caldus,* that retain a measure of metabolic activity at, and through, the critical 55°C temperature mark. The maintenance energy requirement of this population results in a continued oxygen requirement at temperatures beyond which population growth occurs. This means that although the prevailing temperatures may no longer be conducive to growth the existing biomass, grown in place during lower prevailing heap temperatures, continues to exert a maintenance energy demand, which in turn results in a continued oxygen demand and in a continued heat generation action, at and beyond the 55°C temperature mark (or more generally between 50 and 60°C), even though microbial growth is impeded at and around this critical temperature. This effect is referred to as the "maintenance overhang" effect. This "maintenance overhang" effect allows for a temperature progression through the Microbial growth barrier temperature of 55°C and into the lower 60°C temperature range where high activity microbial growth strains such as the *Sulfolobus,* species are able to operate.

The impact of the maintenance overhang effect is critically dependent on the rate of heap temperature progression. Because the non-growing biomass is constantly exposed to a decay effect, the mesophilically-grown heap biomass rapidly decomposes and thus diminishes at thermophilic temperatures. The duration of the maintenance effect is therefore limited, and should be enhanced during a transient impact period. It is important that the heat generating maintenance effect of the rapidly diminishing mesophilic biomass be enhanced in the 50-60°C temperature range. This can be done by taking other operating measures to reduce heat loss within this temperature regime including, for example reduction of air- and liquid-ingress, and the use of any other suitable techniques.

As the supplementation of carbon dioxide takes place without a significant dependent variation in the air flow rate it is possible to separate the control of the air flow rate from the carbon dioxide delivery rate. The air flow rate and rotated heat losses can thus be minimised without compromising microbial growth and heat generation due to carbon dioxide limitations.

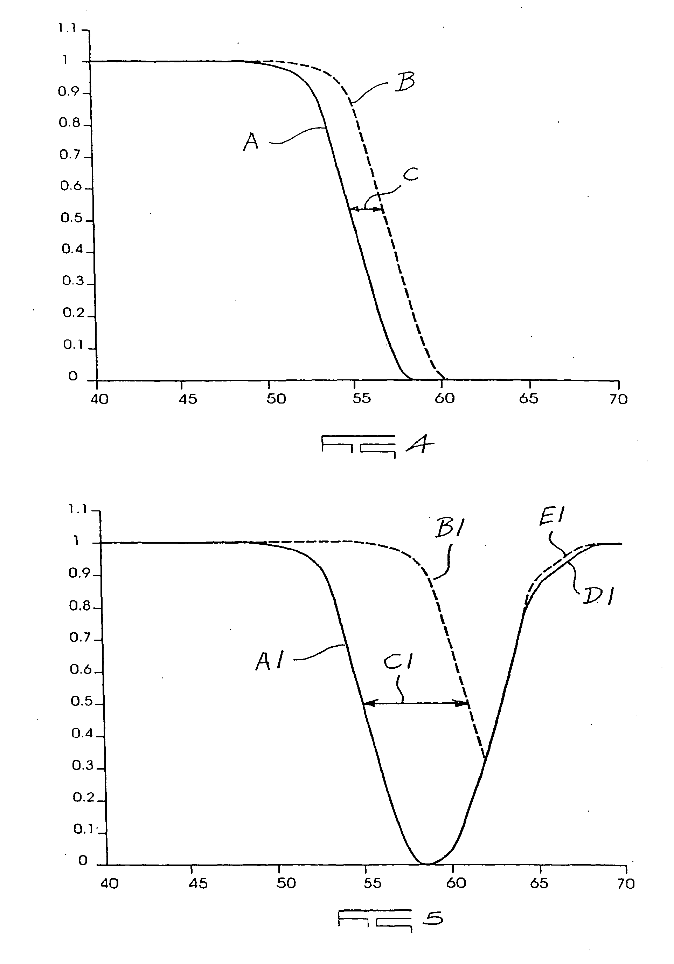

Figure 4 includes a solid line curve A and a dotted line curve B which respectively reflect CO₂ consumption and O₂ consumption, as a function of temperature in a conventional heap i.e. without CO₂ supplementation.

The CO₂ consumption rate is used an indicator of microbial growth, while the O₂ consumption rate is used as an indicator of heat generation through microbially-catalyzed mineral oxidation reactions.

The solid line curve A shows that the mesophilic microbial growth rate (measured by the CO₂ consumption rate) declines rapidly above 50°C. This is due to the fact that the cells cease to grow, and the existing, mainly mesophile, cell population is exposed to a decay rate which increases as a function of temperature. The O₂ consumption rate declines in a similar way, but at a higher temperature, thus demonstrating the maintenance overhang effect.

The lateral displacement C of the curves A and B is due to the maintenance overhang effect which means that oxygen consumption continues, due to metabolic energy requirements, even when cell growth declines.

It is evident that thermophilic temperatures cannot be obtained because the level of heat generation is inadequate to raise the heap temperature above about 60°C.

Figure 5 shows the situation which results when the heap is supplemented with CO₂ at mesophilic temperatures.

The mesophilic microbial growth rate (curve A1) is effectively the same as the curve A, for CO₂ supplementation does not affect this curve. However the CO₂ supplementation results in a higher temperature range, and the oxygen consumption rate (curve B1) and hence heat generation rate, are maintained at higher levels at higher temperatures. The lateral displacement C1 between the curves A1 and B1 is greater than the displacement C in Figure 4, for non-steady state conditions.

The increased maintenance overhang effect allows higher temperatures, within the growth range of thermophilic bioleaching microbes, to be reached within the heap.

The increased maintenance overhang effect due to CO₂ supplementation is caused by two main factors. CO₂ supplementation, firstly, results in increased mesophile cell concentrations and, secondly, results in a more rapid progression through the temperature sequence. These two factors cause the decay rate to have a lesser effect on cell maintenance oxygen utilization (under non-steady state conditions) compared to scenarios with reduced cell concentrations and a slower progression through the temperature range. This is because a higher mesophile cell concentration, wherein the growth and overall biomass have been stimulated by CO₂ supplementation during mesophilic growth conditions, can sustain more heat generation during the maintenance overhang effect than would be the case with a lower mesophile biomass concentration.

The greater cell density at mesophilic temperatures produces biomass which is prone to some measure of decay at elevated temperatures. The decaying biomass provides soluble organic carbon sources to stimulate the growth of heterotrophic, mixotrophic or even autothropic microbes involved in the population dynamics of the bioleaching process.

For example it is known that the *Ferroplasma* species, which are prolific iron oxidisers in the moderate thermophilic temperature range, require an organic carbon source for growth. Sulphur oxidising microbes in this temperature range, such as *Sulfobacillus,* also benefit from the presence of organic carbon sources. *Acidimicrobium* species may also benefit in a similar manner

The decaying biomass may also release carbon dioxide which would stimulate autotrophic microbial bioleaching strains.

The thermophilic growth curve marked D1 extends from slightly below 60°C and, is closely matched by the oxygen consumption rate (curve E1).

Rapid microbial growth throughout the heap is achieved leading to more uniform heat generation. The average heat generation rate for the heap is increased and this increases the prospect of obtaining an elevated temperature in a shorter time period. As the elevated temperature is achieved more rapidly the amount of oxidizable equivalents used to attain the elevated temperature is less than if the same elevated temperature were reached over a longer period of time. ' Consequently more of the oxidizable equivalents are left in the ore to sustain the elevated heap temperature. A longer exposure period to an elevated leaching temperature is known to increase the efficiency of copper recovery from chalcopyrite.

The invention has been described with particular reference to the bioleaching of chalcopyrite. This has been given only by way of a non-limiting example. The principles of the invention could be applied in a high sulphide content bioleaching situation, for example in heap leaching where ores have been agglomerated with a concentrate. The invention could also be used in a heap bioleaching application even if a prolific high-activity autotrophic sulphur oxidising strain capable of growth at 55°C i.e. from 50°C to 60°C were to be identified and included in a suite of microbes for bioleaching the heap.

## Claims

1. In a microbial heap leaching operation, a method of increasing the level of heat generated in the heap at moderate thermophilic temperatures, which includes the steps of stimulating microbial growth in the heap at mesophilic temperatures by adding carbon dioxide to a flow of air which is directed into the heap, monitoring the concentration of carbon dioxide in an air flow exiting the heap and, in response thereto, of controlling the addition of carbon dioxide to the air flow which is directed into the heap to maintain the concentration of the carbon dioxide exiting the heap either above the half-saturation constant for a general mesophilic microbial population prevailing in the heap or at an experimentally determined value which is dependent at least on the following factors: a specific microbial inoculation composition in the heap, and the amount of carbon dioxide which is liberated from the interaction of gangue minerals with an acidic raffinate solution, returned to the heap, which is produced by stripping the metal content from a pregnant liquid solution draining from the heap.

2. A method according to claim 1 wherein the step of stimulating microbial growth is commenced when the temperature in the heap is at or close to ambient temperature.

3. A method according to claim 1 wherein the half saturation content for a general mesophilic microbial population in a heap is in the range 0,02 to 0,05% v/v CO₂.

## Patentansprüche

1. In einem mikrobiellen Haldenauslaugungsverfahren umfasst ein Verfahren zum Erhöhen der Menge an erzeugter Wärme in der Halde bei moderaten thermophilen Temperaturen die Schritte: Stimulieren eines Mikrobenwachstums in der Halde bei mesophilen Temperaturen durch Zusetzen von Kohlendioxid zu einem Luftstrom, der in die Halde geleitet wird, Überwachen der Konzentration an Kohlendioxid in einem Luftstrom, der die Halde verläßt, und in Abhängigkeit davon, Steuern der Zugabe von Kohlendioxid zum Luftstrom, der in die Halde geleitet wird, um die Konzentration des Kohlendioxids, das die Halde verläßt, entweder über der Halbsättigungskonstante für eine allgemeine mesophile Mikrobenpopulation, die in der Halde vorherrscht, oder bei einem experimentell bestimmten Wert zu halten, der mindestens von den folgenden Faktoren abhängt: einer spezifischen Mikrobeninokulationszusammensetzung in der Halde und der Menge an Kohlendioxid, die freigesetzt wird durch die Wechselwirkung von Gangerzmineralien mit einer in die Halde zurückgeführten sauren Raffinatlösung, die durch Abziehen des Metallgehalts aus einer angereicherten flüssigen Lösung gebildet ist, die aus der Halde sickert.

2. Verfahren nach Anspruch 1, wobei der Schritt zum Stimulieren des Mikrobenwachstums beginnt, wenn die Temperatur in der Halde bei oder nahe bei der Umgebungstemperatur liegt.

3. Verfahren nach Anspruch 1, wobei der Halbsättigungsgehalt für eine allgemeine mesophile Mikrobenpopulation in der Halde im Bereich von 0,02 bis 0,05 Vol./Vol.-% CO₂ liegt.

## Revendications

1. Dans une opération de lixiviation microbienne en tas, procédé d'augmentation du niveau de chaleur généré dans le tas à des températures thermophiles modérées, qui comprend les étapes consistant à stimuler la croissance microbienne dans le tas à des températures mésophiles en ajoutant du dioxyde de carbone à un écoulement d'air qui est dirigé à l'intérieur du tas, surveiller la concentration de dioxyde de carbone dans un écoulement d'air sortant du tas et, en réponse à celle-ci, contrôler l'addition de dioxyde de carbone à l'écoulement d'air qui est dirigé à l'intérieur du tas pour maintenir la concentration du dioxyde de carbone sortant du tas au-dessus de la constante de demi-saturation pour une population microbienne mésophile générale prédominant dans le tas ou à une valeur déterminée expérimentalement qui dépend au moins des facteurs suivants : une composition d'inoculation microbienne spécifique dans le tas, et la quantité de dioxyde de carbone qui est libérée par l'interaction de minéraux de gangue avec une solution de raffinat acide, retournée au tas, qui est produite en extrayant le contenu métallique d'une solution liquide enrichie s'égouttant du tas.

2. Procédé selon la revendication 1 dans lequel l'étape de stimulation de la croissance microbienne est débutée quand la température dans le tas est à ou proche de la température ambiante.

3. Procédé selon la revendication 1 dans lequel la teneur à demi-saturation pour une population microbienne mésophile générale dans un tas se situe dans la gamme de 0,02 à 0,05 % V/V de CO₂.
